# EUROPEAN PATENT APPLICATION

(11) **EP 2 733 173 A1**
(43) Date of publication of application: **21.05.2014**
(21) Application number: 12193342.8
(22) Date of filing: 20.11.2012
(51) Int. Cl.: C08L 23/10, C08F 2/14, C08F 10/06

(54) **Polypropylene polymer presenting improved strain hardening behaviour**

(71) Applicant: TOTAL RESEARCH & TECHNOLOGY FELUY, 7181 Seneffe (BE)
(72) Inventor: Lhost, Olivier, 7021 Havré (BE)
(74) Representative: Leyder, Francis

(57) **Abstract**

The present invention provides a polypropylene polymer presenting a strain hardening or melt strength behavior in a window Hencky strain rate range of values and the process for the production of such polypropylene. Said process comprises in a first step, providing a first polymer with long chain branches, in a second step, polymerizing propylene monomer and optionally at least one alpha olefin comonomer in the presence of a catalyst, hydrogen thereby obtaining a second polymer, said second polymer is polymerized in the presence of the long chain branched first polymer, thereby obtaining the polypropylene polymer blend. The melt flow index of the first polymer is lower than the melt flow index of the second polymer and is at maximum 10 g/10 min, and the ratio of the melt flow index of the first polymer to the melt flow index of the second polymer is at least 10.

## Description

### Field of the invention

The present invention discloses a process for polymerizing propylene or copolymerizing propylene and one or more comonomers to produce a polypropylene having improved rheological properties and improved melt strength behavior). Further, the present application discloses such a polypropylene having improved rheological properties.

### Background

Polypropylene is a commodity polymer well appreciated in many applications. However, one of the major drawbacks of polypropylene is the low melt strength, or equivalently low strain hardening, of the grades usually proposed on the market. This has strong implications in the use of polypropylene (PP). For instance, in blown film applications, to avoid bubble stability issues, high molecular weight polypropylene grades are used. Due to the associated high viscosity, there are usually throughput restrictions. In thermoforming applications, when heating the sheets, sagging is a currently reported problem, imposing to use resins with appropriate melt flow index. Foam applications are very limited for PP. Very specific, sophisticated and constraint processes like "polypropylene expanded bead" technology exist, however it is known that polypropylene foam production is harder than e.g. with polyethylene appropriate grades.

Several options are known to introduce long chain branching and improve the melt strength of a polymer.

EP 2 220 133 discloses a process for preparing a long chain branched propylene polymer comprising (i) copolymerising propylene and a tertiary diene using a Ziegler Natta catalyst and (ii) treating the obtained copolymer, with a free radical initiator, to introduce long chain branching. However, the use of radicals is expensive due to the need to use high content of specific radical initiators, like peroxydicarbonate compounds. Moreover, industrial quantities of these dienes are not available and the dienes must be eliminated after polymerization, which is a difficult and expensive operation.

Metallocene catalysts and other single site catalysts enable the production of controlled molecular structure polypropylenes with narrow molecular weight distributions and polypropylenes prepared using such catalyst species often possess improved mechanical properties. However, this improvement in mechanical properties is generally achieved only at the expense of a loss in processability. Selecting appropriate polymerization processes, it is possible to produce linear polypropylene chains, using bulk polymerization processes, or branched polypropylene, if slurry processes are used. This is illustrated for example in EP 1 195 391. However, despite the rheological evidences of long chain branching, the resins described in in EP 1 195 391 do not present significant strain hardening.

Two stage polymerizations were developed and comprise macromers production with vinyl end-groups using a given metallocene catalyst, followed by a copolymerization of the macromers with propylene to obtain LCB PP. However, the experimental conditions are not very interesting from an industrial point of view, i.e. production of macromers at temperature above 90°C and preferably around 120°C. In addition, the production process is not cost competitive and the obtained polypropylene has low melt strength.

There still remains a need for an industrially cost-effective polypropylene preparation process presenting a significant strain hardening behavior.

It is an aim of the present invention to provide a polypropylene presenting a strain hardening or melt strength behavior in a "window" Hencky strain rate range of values. It is also an aim of the present invention to provide a process for the production of said polypropylene.

### Summary

The present invention provides a process for the production of a polypropylene polymer blend presenting improved elongational viscosity and strain hardening behavior, said process comprising:
i) in a first step, providing a first polymer with long chain branches,
ii) in a second step, polymerizing propylene monomer and optionally at least one alpha olefin comonomer in the presence of a catalyst, and hydrogen thereby obtaining a second polymer, said second polymer is polymerized in the presence of the long chain branched first polymer, thereby obtaining the polypropylene polymer blend.

The process is characterized in that the melt flow index of the first polymer is lower than the melt flow index of the second polymer and is at maximum 10 g/10 min, and the ratio of the melt flow index of the first polymer to the melt flow index of the second polymer is at least 10.

The process has the advantageous effect that it provides a composition which displays an improved strain hardening behavior. The improvement is situated in that the maximum strain hardening is observed for intermediate Hencky strain rates values. To the inventors surprise, a strain hardening "window" was thus obtained. To our knowledge such strain hardening "window" has only been observed for monodisperse polystyrene blends (D. Auhl, P. Chambon, T.C.B. McLeish and D.J. read, Physical Review Letters 136001 (25 September 2009)), not for compositions of non-monodisperse blends and/or polypropylene polymers.

In a preferred embodiment, the polymer blend comprises from 0.1 to 25 wt% of the first polymer, expressed in total weight of polymers in the blend.

In a preferred embodiment, the long chain branched first polymer is obtained by polymerizing propylene monomer and optionally at least one alpha olefin comonomer in the presence of a metallocene polymerization catalyst, a diluent and in the absence of hydrogen.

In a preferred embodiment, the metallocene catalyst is *rac*-Me₂Si(2-Me-4-Ph-Ind)₂ZrCl₂ or Ph₂C(2-Me-4-tBu-Cp)(2,7-tBu₂-Flu)ZrCl.

In a preferred embodiment, the blend has a molecular weight distribution, defined as the ratio M_{w}/Mₙ of weight average molecular weight M_{w} to number average molecular weight Mₙ, of at least 2.0 and of at most 5, with Mₙ and M_{w} determined by size exclusion chromatography.

In a second aspect, the present invention provides polypropylene blend obtained according to an embodiment of the process of the invention. Said polypropylene is characterized in that its strain hardening reaches its maximum at a Hencky strain rate value ε₀ between 1 and 0.001s⁻¹, as measured using the ARES Elongation Viscosity Fixture at a temperature of 180 °C.

In a preferred embodiment, a plot setting out elongational viscosity of the polypropylene blend, expressed in Pa.s, versus time, expressed in seconds, at Hencky strain rate values between 1 and 0.001s⁻¹, displays a maximum between ε₀= 0.8 and 0.01s⁻¹.

In a third aspect, the present invention provides a process for manufacturing a polymer article, comprising blow moulding a polypropylene blend as described in the present invention.

### Description of the figures

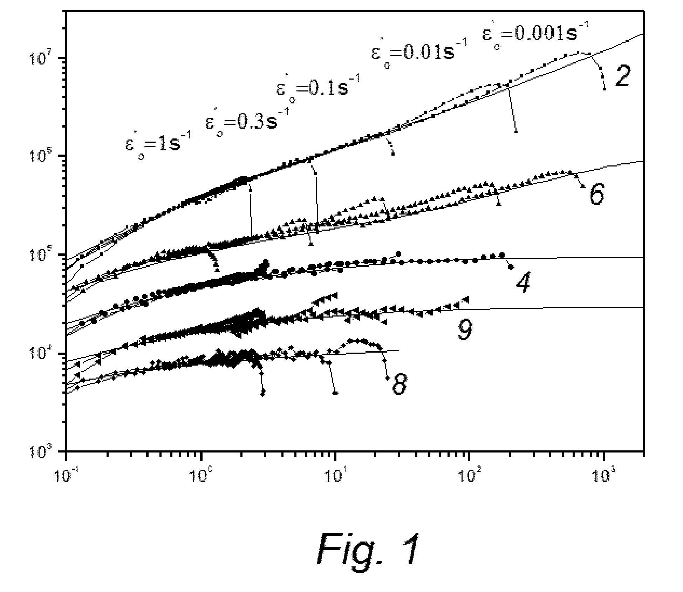

**FIG. 1** provides a graphical representation of the elongational viscosity of samples 2, 4, 6, 8 and 9 shown as a function of time for different Hencky strain rates ε₀. The y axis is a logarithmic axis and represents the elongational viscosity in Pa.s and the x axis represents time in seconds.

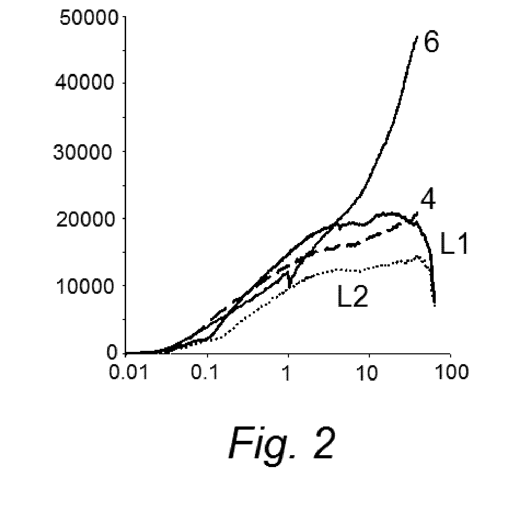

**Fig. 2** provides a graphical representation of the elongational viscosity of polypropylenes according to an embodiment of the invention and of linear polypropylene for MFIs ranging from 1.16 to 3.5 g/10 min. The y axis is a linear axis and represents the elongational viscosity in Pa*s and the x axis represents time in seconds.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

Throughout the present application the terms "polypropylene" and "propylene polymer" may be used synonymously.

In polymer architecture, a lateral chain is considered as a long chain branch as soon as it significantly influences the rheological behaviour. The length (M_{c}) required for a branch to do so and thus to behave as a long chain branch is usually estimated to be 2 * Mₑ with Mₑ being the molecular weight between entanglements. For polypropylene, M_{c} is about 11200 dalton.

Throughout the present application the melt flow index, abbreviated as "MFI", of polypropylene and polypropylene compositions is determined according to ISO 1133, condition L, at 230 °C and 2.16 kg.

The polypropylene according to an embodiment of the invention may be prepared in a series of stages, preferably a series of reactors, more preferably at least two reactors. The PP is prepared by carefully tailoring the reaction stages to ensure that LCB, when present, are located in the reactor producing the fraction having a high molecular weight.

The present invention provides a process for the production of a polypropylene polymer blend presenting improved elongational viscosity and strain hardening behavior, said process comprising:
i) in a first step, also called herein prepolymerization, providing a first polymer with long chain branches,
ii) in a second step, polymerizing propylene monomer and optionally at least one alpha olefin comonomer in the presence of a catalyst, hydrogen thereby obtaining a second polymer, said second polymer is polymerized in the presence of the long chain branched first polymer, thereby obtaining the polypropylene polymer blend. Preferably said catalyst is a metallocene catalyst.

The melt flow index of the first polymer is lower than the melt flow index of the second polymer and is at maximum 10 g/10 min, preferably at maximum 1 g/10 min, even more preferably at maximum 0.2 g/10 min.

The ratio of the melt flow index of the first polymer to the melt flow index of the final polymer (so the polymer at the end of the second step) is at least 10, preferably at least 20, more preferably at least 30, even more preferably at least 40, most preferably at least 50.

Said MFI ratio is adjusted such that the final MFI (so the MFI of the blend of the polymers produced in the two steps) according to an embodiment of the invention is suitable to the targeted application. If used for films the polypropylene according to an embodiment of the present invention preferably has a melt flow index in the range from 1 to 10 g/10 min, more preferably in the range from 1 to 4 g/10 min and most preferably in the range from 1.5 to 4 g/10 min. When used in fiber and nonwoven applications the polypropylene of an embodiment of the present invention have a melt flow index in the range from 5 g/10 min to 2000 g/10 min, as measured according to ISO 1133, condition L, at 230°C under 2.16 kg. When used for fiber spinning the melt flow of the polypropylene is in the range from 5 g/10 min to 40 g/10 min. When used in the spunbonding process the melt flow of the PP is at least 10 g/10 min, preferably at least 15 g/10 min, and most preferably at least 20 g/10 min. When used in the spunbonding process the melt flow of the polypropylene is at most 300 g/10 min, preferably at most 200 g/10 min, more preferably at most 150 g/10 min, even more preferably at most 100 g/10 min and most preferably at most 60 g/10 min. When used in the melt blown process the melt flow of the polypropylene is at least 100 g/10 min, preferably at least 150 g/10 min, more preferably at least 200 g/10 min, even more preferably at least 250 g/10 min and most preferably at least 300 g/10 min. When used in the melt blown process the melt flow of the polypropylene is at most 2000 g/10 min, preferably at most 1800 g/10 min, more preferably at most 1600 g/10 min, and most preferably at most 1400 g/10 min.

In a preferred embodiment, the polymer blend comprises from 0.1 to 25 wt% of the first polymer, preferably from 1 to 10 wt %, more preferably from 2 to 10 wt %, most preferably from 5 to 10 wt% of the polymer blend expressed in total weight of polymers in the blend.

In a preferred embodiment, the polymer blend has a molecular weight distribution, defined as the ratio M_{w}/Mₙ of weight average molecular weight M_{w} to number average molecular weight Mₙ, of at least 2.0, preferably of at least 2.4, more preferably at least 3, most preferably at least 3.5. The polymer blend has a molecular weight distribution of at most 20, preferably at most 10, more preferably at most 7, most preferably at most 5, with Mₙ and M_{w} determined by size exclusion chromatography.

In a preferred embodiment, the long chain branched first polymer is obtained by polymerizing propylene monomer and optionally at least one alpha olefin comonomer in the presence of a metallocene polymerization catalyst, a diluent and in the absence of hydrogen.

In a preferred embodiment, said first step and second step are performed in two different reactors. In another preferred embodiment, said first and second polymerization stage are performed in the same reactor.

Slurry, bulk or gas phase processes could be used in the process of the invention. When the first and second steps of the process are performed in two different reactors, a bulk or a gas phase polymerization is preferably used in at least one reactor thereby obtaining high catalyst productivity. In a preferred embodiment, a solvent is used in the reactor wherein a slurry process is performed. Said solvent is a hydrocarbon based solvent, preferably selected from the group comprising isobutane, propane, heptane and hexane.

The first step of the process can be a gas or bulk polymerization. Preferably, a slurry polymerization is used in the first step. In said first step of the process, hexane, propane, heptane, isobutane or any mixture thereof is used as diluent. The reaction is carried out for a few seconds to 1 hour, preferably for 1 to 10 min at a temperature ranging from 0 to 120°C, preferably from 0 to 70°C and under a pressure lower than 45 bars. Alkyl aluminium compounds are added, preferably triethylaluminium or tributylaluminium.

The second polymerization step is a gas or bulk polymerization, preferably a bulk polymerization. The reaction is performed at a temperature ranging from 45 to 100°C, preferably about 70°C, under a pressure ranging from 10 to 45 bars.

The polypropylene blend according to another embodiment of the present invention can be obtained by physically blending at least two propylene polymers. The MFI ratio between said two propylene polymers should be at least 10, preferably at least 50. The propylene polymer having the lowest MFI corresponds to 0.1 to 25 wt%, preferably 1 to 10 wt%, more preferably 2 to 10 wt% of the final polypropylene blend.

For the production of the polypropylene according to an embodiment of the present invention, Ziegler-Natta catalysts could be used. Preferably, single-site catalysts like metallocene catalysts are preferred.

Advantageously the metallocene-based polymerization catalysts used, preferably in both the first and in the second steps of the process of a process according to the present invention, comprise a bridged metallocene component, a support and an activating agent. Such metallocene-based polymerization catalysts are generally known in the art and need not be explained in detail. The metallocene catalysts used in the in the first and in the second polymerization stage might be identical or different from each other. Preferably said metallocene catalysts are identical.

The metallocene component can be described by the following general formula

(µ-R^{a})(R^{b})(R^{e})MX¹X² (I)

wherein R^{a}, R^{b}, R^{c}, M, X¹ and X² are as defined below.

R^{a} is the bridge between R^{b} and R^{c}, i.e. R^{a} is chemically connected to R^{b} and R^{c}, and is selected from the group consisting of -(CR¹R²)ₚ-, -(SiR¹R²)ₚ-, -(GeR¹R²)ₚ- , -(NR¹)ₚ-, -(PR¹)ₚ-, -(N⁺R¹R²)ₚ- and -(P⁺R¹R²)ₚ-, and p is 1 or 2, and wherein R¹ and R² are each independently selected from the group consisting of hydrogen, C₁-C₁₀ alkyl, C₅-C₈ cycloalkyl, C₆-C₁₅ aryl, alkylaryl with C₁-C₁₀ alkyl and C₆-C₁₅ aryl, or any two neighboring R (i.e. two neighboring R¹, two neighboring R², or R¹ with a neighboring R²) may form a cyclic saturated or non-saturated C₄-C₁₀ ring; each R¹ and R² may in turn be substituted in the same way. Preferably R^{a} is -(CR¹R²)ₚ- or -(SiR¹R²)ₚ- with R¹, R² and p as defined above. Most preferably R^{a} is - (SiR¹R²)ₚ- with R¹, R² and p as defined above. Specific examples of R^{a} include Me₂C, ethanediyl (-CH₂-CH₂-), Ph₂C and Me₂Si.

M is a metal selected from Ti, Zr and Hf, preferably it is Zr.

X¹ and X² are independently selected from the group consisting of halogen, hydrogen, C₁-C₁₀ alkyl, C₆-C₁₅ aryl, alkylaryl with C₁-C₁₀ alkyl and C₆-C₁₅ aryl. Preferably X¹ and X² are halogen or methyl.

R^{b} and R^{c} are selected independently from one another and comprise a cyclopentadienyl ring.

Preferred examples of halogen are Cl, Br, and I. Preferred examples of C₁-C₁₀ alkyl are methyl, ethyl, n-propyl, iso-propyl, n-butyl, iso-butyl, and tert-butyl. Preferred examples of C₅-C₇ cycloalkyl are cyclopentyl, cyclohexyl, cycloheptyl and cyclooctyl. Preferred examples of C₆-C₁₅ aryl are phenyl and indenyl. Preferred examples of alkylaryl with C₁-C₁₀ alkyl and C₆-C₁₅ aryl are benzyl (-CH₂-Ph), and - (CH₂)₂-Ph.

Preferably, R^{b} and R^{c} may both be substituted cyclopentadienyl, or may be independently from one another unsubstituted or substituted indenyl or tetrahydroindenyl, or R^{b} may be a substituted cyclopentadienyl and R^{c} a substituted or unsubstituted fluorenyl. More preferably, R^{b} and R^{c} may both be the same and may be selected from the group consisting of substituted cyclopentadienyl, unsubstituted indenyl, substituted indenyl, unsubstituted tetrahydroindenyl and substituted tetrahydroindenyl. By "unsubstituted" is meant that all positions on R^{b} resp. R^{c}, except for the one to which the bridge is attached, are occupied by hydrogen. By "substituted" is meant that, in addition to the position at which the bridge is attached, at least one other position on R^{b} resp. R^{c} is occupied by a substituent other than hydrogen, wherein each of the substituents may independently be selected from the group consisting of C₁-C₁₀ alkyl, C₅-C₇ cycloalkyl, C₆-C₁₅ aryl, and alkylaryl with C₁-C₁₀ alkyl and C₆-C₁₅ aryl, or any two neighboring substituents may form a cyclic saturated or non-saturated C₄-C₁₀ ring.

A substituted cyclopentadienyl may for example be represented by the general formula C₅R³R⁴R⁵R⁶. A substituted indenyl may for example be represented by the general formula C₉R⁷R⁸R⁹R¹⁰R¹¹R¹²R¹³R¹⁴. A substituted tetrahydroindenyl may for example be represented by the general formula C₉H₄R¹⁵R¹⁶R¹⁷R¹⁸. A substituted fluorenyl may for example be represented by the general formula C₁₃R¹⁹R²⁰R²¹R²²R²³R²⁴R²⁵R²⁶. Each of the substituents R³ to R²⁶ may independently be selected from the group consisting of hydrogen, C₁-C₁₀ alkyl, C₅-C₇ cycloalkyl, C₆-C₁₅ aryl, and alkylaryl with C₁-C₁₀ alkyl and C₆-C₁₅ aryl, or any two neighboring R may form a cyclic saturated or non-saturated C₄-C₁₀ ring; provided, however, that not all substituents simultaneously are hydrogen.

Preferred metallocene components are those having C₂-symmetry or those having C₁-symmetry. Most preferred are those having C₂-symmetry.

Particularly suitable metallocene components are those wherein R^{b} and R^{c} are the same and are substituted cyclopentadienyl, preferably wherein the cyclopentadienyl is substituted in the 2-position, the 3-position, or simultaneously the 2-position and the 3-position.

Particularly suitable metallocene components are also those wherein R^{b} and R^{c} are the same and are selected from the group consisting of unsubstituted indenyl, unsubstituted tetrahydroindenyl, substituted indenyl and substituted tetrahydroindenyl. Substituted indenyl is preferably substituted in the 2-position, the 3-position, the 4-position, the 5-position or any combination of these, more preferably in the 2-position, the 4-position or simultaneously in the 2-position and the 4-position. Substituted tetrahydroindenyl is preferably substituted in the 2-position, the 3-position, or simultaneously the 2-position and the 3-position.

Particularly suitable metallocene components may also be those wherein R^{b} is a substituted cyclopentadienyl and R^{c} is a substituted or unsubstituted fluorenyl. The substituted cyclopentadienyl is preferably substituted in the 2-position, the 3-position, the 5-position or simultaneously any combination of these, more preferably in the 3-position or the 5-position or both simultaneously, most preferably in the 3-position only, with a bulky substituent. Said bulky substituent may for example be -CR²⁷R²⁸R²⁹ or -SiR²⁷R²⁸R²⁹ with R²⁷, R²⁸ and R²⁹ independently selected from group consisting of C₁-C₁₀ alkyl, C₅-C₇ cycloalkyl, C₆-C₁₅ aryl, and alkylaryl with C₁-C₁₀ alkyl and C₆-C₁₅ aryl, or any two neighboring R may form a cyclic saturated or non-saturated C₄-C₁₀ ring. it is preferred that R²⁷, R²⁸ and R²⁹ are methyl.

Examples of particularly suitable metallocenes are:
dimethylsilanediyl-bis(2-methyl-cyclopentadienyl)zirconium dichloride,
dimethylsilanediyl-bis(3-methyl-cyclopentadienyl)zirconium dichloride,
dimethylsilanediyl-bis(3-tert-butyl-cyclopentadienyl)zirconium dichloride,
dimethylsilanediyl-bis(3-tert-butyl-5-methyl-cyclopentadienyl)zirconium dichloride,
dimethylsilanediyl-bis(2,4-dimethyl-cyclopentadienyl)zirconium dichloride,
dimethylsilanediyl-bis(indenyl)zirconium dichloride,
dimethylsilanediyl-bis(2-methyl-indenyl)zirconium dichloride,
dimethylsilanediyl-bis(3-methyl-indenyl)zirconium dichloride,
dimethylsilanediyl-bis(3-tert-butyl-indenyl)zirconium dichloride,
dimethylsilanediyl-bis(4,7-dimethyl-indenyl)zirconium dichloride,
dimethylsilanediyl-bis(tetrahydroindenyl)zirconium dichloride,
dimethylsilanediyl-bis(benzindenyl)zirconium dichloride,
dimethylsilanediyl-bis(3,3'-2-methyl-benzindenyl)zirconium dichloride,
dimethylsilanediyl-bis(4-phenyl-indenyl)zirconium dichloride,
dimethylsilanediyl-bis(2-methyl-4-phenyl-indenyl)zirconium dichloride,
ethanediyl-bis(indenyl)zirconium dichloride,
ethanediyl -bis(tetrahydroindenyl)zirconium dichloride,
isopropylidene-(3-tert-butyl-cyclopentadienyl)(fluorenyl) zirconium dichloride
isopropylidene-(3-tert-butyl-5-methyl-cyclopentadienyl)(fluorenyl) zirconium dichloride.

The metallocene may be supported according to any method known in the art. In the event it is supported, the support used in the present invention can be any organic or inorganic solid, particularly porous supports such as talc, inorganic oxides, and resinous support material such as polyolefin. Preferably, the support material is an inorganic oxide in its finely divided form. The preferred supported catalyst has a mean average diameter ranging between 5 and 100 µm, preferably about 20 µm. The preferred particle diameters distribution is narrow. Considering the preferred catalyst, for a 20 µm mean catalyst diameter, less than 10% of the particle has a mean diameter smaller than 10 µm and less than 10% a diameter bigger than 42 µm.

Preferably an activator is used together with the metallocene molecule for the production of the polypropylene according to an embodiment of the invention. Said activator is selected from the group comprising methylaluminoxane (MAO) or boron derivatives. The support could be also used as activator.

The polypropylene obtained by the present polymerization process is in particularly characterized by improved strain hardening in a window Hencky strain rate range of values. It is expected that these improved elongational properties will result in improved processability in applications and transformation methods which necessitate a certain level of melt strength in the polypropylene. This is specifically the case in extrusion applications, such as for example extrusion blow molding, film extrusion, as well as in applications where an intermediate article is transformed into a final article at a temperature at which the polypropylene is soft, such as for example in thermoforming, injection stretch blow molding. The improved elongational properties of the present polypropylene allow easier processing on the one hand, while on the other hand also resulting in improved properties, particularly in improved mechanical properties such as for example in improved toughness, of the final polypropylene articles.

The improved strain hardening and melt strength behavior of the polypropylene according to an embodiment of the invention is obtained for a window Hencky strain rate ranging from ε=1s⁻¹ to ε=0.001s⁻¹, preferably from ε=0.8s⁻¹ ε=0.01s⁻¹. Most preferably, the optimum strain hardening rate is at about ε=0.1s⁻¹.

In a second aspect, the present invention provides polypropylene blend obtained according to an embodiment of the process of the invention. Said polypropylene is characterized in that its strain hardening reaches its maximum at a Hencky strain rate value ε₀ between 1 and 0.001s⁻¹, as measured using the ARES Elongation Viscosity Fixture at a temperature of 180 °C.

The polypropylene blend obtained according to an embodiment of the process of the invention has enhanced melt strength properties and is less expensive compared to polypropylenes obtained by processes described in the prior art.

In a preferred embodiment, a plot setting out elongational viscosity of the polypropylene blend, expressed in Pa.s, versus time, expressed in seconds, at Hencky strain rate values between 1 and 0.001s⁻¹, displays a maximum at about ε=0.1s⁻¹.

The polypropylene blend is preferably made with a process according to an embodiment of the invention.

Alternatively, the polypropylene blend according to an embodiment of the present invention is obtained by physically blending at least two propylene polymers. The MFI ratio between said two propylene polymers should be at least 10, preferably at least 50. The propylene polymer having the lowest MFI corresponds to 0.1 to 25 wt%, preferably 1 to 10 wt%, more preferably 2 to 10 wt% of the final polypropylene blend.

In a third aspect, the present invention provides a process for manufacturing a polymer article, comprising blow moulding a polypropylene blend as described in the present invention.

### Test methods

Elongation measurements were conducted at 180°C using the ARES Elongational Viscosity Fixture (EVF). The protocol for the measurement comprises:
- Oven heating with elongational fixture including clamps for at least 20 minutes.
- Sample loading: the loading may take up to ten seconds, and the time how fast one can load determines the reheating time.
- Oven reheating, up to 5 minutes, and thermal equilibration of sample.
- Elongational measurements on rectangular plates at 180°C. In this step the strain rate will be constant and the torque response is measured and plotted as elongational viscosity. The duration of this step depends on the strain rate and the maximum Hencky strain to be achieved with. For all measurements, a maximum Hencky strain, ε_{H max} = 4, was set, even if all the samples rapture before reaching this strain value.

All elongational test where conducted in ARES EVF at 180°C under nitrogen environment. A constant strain rate was applied to measure the torque signal which is later interpreted as elongational viscosity.

The "reptate" software was used for data analysis.

Molecular weights were determined by Size Exclusion Chromatography (SEC) at a temperature of 145 °C. A 10 mg polypropylene or polyethylene sample was dissolved at 160 °C in 10 ml of trichlorobenzene, technical grade, for 1 hour. Analytical conditions for the GPCV 2000 apparatus from WATERS were:
- Injection volume: +/- 400µl
- Automatic sample preparation and injector temperature: 160 °C
- Column temperature: 145 °C
- Detector temperature: 160 °C
- Column set: 2 Shodex AT-806MS and 1 Styragel HT6E
- Flow rate: 1 ml/min
- Detector: Infrared detector (2800-3000 cm⁻¹)
- Calibration: Narrow standards of polystyrene (commercially available)
- Calculation for polypropylene: Based on Mark-Houwink relation (log₁₀(M_{PP}) = log₁₀(M_{PS}) - 0.25323 ); cut off on the low molecular weight end at M_{PP} = 1000.

The molecular weight distribution (MWD) was then calculated as M_{w}/Mₙ.

Melting temperatures Tₘₑₗₜ and crystallization temperatures T_{cryst} were determined according to ISO 3146 on a DSC Q2000 instrument by TA Instruments. To erase the thermal history, the samples were first heated to 200 °C and kept at 200 °C for a period of 3 minutes. The reported melting temperatures Tₘₑₗₜ and T_{cryst} were then determined with heating and cooling rates of 20 °C/min.

### Examples

The advantages of the present invention are illustrated by the following representative examples. Samples 1 to 9 were produced according to standard polymerization methods using components and conditions summarized in table 1 and metallocene-based catalysts described hereunder.
- Examples 1 to 4 correspond to "references". The aim was to validate that, using a "slurry-isobutane" process and without prepolymerization, LCB-m polypropylene products are obtained. After one hour polymerization, a sample of polymer characterized by a melt index ranging between 1 and 6 g/10 min was produced.
- Examples 5 to 9 were obtained according to a process of the present invention: a slurry-isobutane prepolymerization, during 10 minutes, was followed by a propylene bulk polymerization, during 1 hour. TEA was used as alkyl aluminium cocatalyst. The content of each component and the reaction parameters are presented in table 1.

Examples 5, 6 and 8 were produced using the supported version of metallocene A and examples 7 and 9 were produced using the supported version of metallocene B also. Metallocene A corresponds to rac-Me₂Si(2-Me-4-Ph-Ind)₂ZrCl₂ and metallocene B corresponds to Ph₂C(2-Me-4-tBu-Cp)(2,7-tBU₂-Flu)ZrCl.

**Table 1**

| | Prepolymerization | Polymerization | | | | | | | |
|---|---|---|---|---|---|---|---|---|---|
| Exp | | Type of metallocene catalyst | Amount of Supported catalyst mg | TEA 10% ml | TIBA 10% ml | P tot bar | H2 NL | T °C | IC4 L |
| 1 | No | A | 40 | | 5.7 | 15 | 0.31 | 70 | 2 |
| 2 | No | A | 40 | | 5.7 | 30 | 0 | 70 | 2 |
| 3 | No | A | 40 | | 5.7 | 30 | 0.13 | 70 | 2 |
| 4 | No | A | 40 | | 5.7 | 25 | 0.13 | 70 | 2 |
| 5 | yes | A | 30 | 0.8 | | 33 | 1 | 70 | 2 |
| 6 | Yes | A | 30 | 0.8 | | 34.5 | 0.53 | 70 | 2 |
| 7 | Yes | B | 200 | 4 | | 34.8 | 0.6 | 70 | 2 |
| 8 | Yes | A | 30 | 0.8 | | 19.4 | 0.8 | 70 | 2 |
| 9 | Yes | B | 200 | 4 | | 19.4 | 0.5 | 70 | 2 |

| | | | | | | | | | |
|---|---|---|---|---|---|---|---|---|---|
| NL=Normal Litre, IC4= isobutane | | | | | | | | | |

The procedure used for obtaining supported metallocene catalysts is as described in EP 1 291 365. Metallocene/activator or cocatalyst/catalyst systems were supported by providing 40 g silica which were transferred into a three-neck roundbottom flask under dry nitrogen purge. Some useful silica-based supporting media may be selected from P-10, Q-10, G-6, silica-titania and silica-alumina as available from Fuji-sylisia as well as H-121 and H-31 as available from Asahi Glass. Preferably the support used will be characterized by an average mean diameter of 20 µm, a uniform particle sizes distribution with an effective surface area higher than 300 m²/g and a pore volume higher than 1 mL/g, preferably higher than 1.6 mL/g. The MFI and the molecular weight of the polypropylene obtained are presented in table 2.

**Table 2**

| Exp | MFI g/10 min | M_{w}/Mₙ |
|---|---|---|
| 1 | 105 | 4.0 |
| 2 | 0.13 | 2.8 |
| 3 | 5.1 | 2.6 |
| 4 | 3.5 | 2.6 |
| 5 | 13 | 4.9 |
| 6 | 1.16 | 3.5 |
| 7 | 6.3 | 2.4 |
| 8 | 9 | 3.2 |
| 9 | 4.1 | 2.4 |

For samples 2 and 6, elongational tests were conducted at five different strain rates ranging from 0.001-1 s⁻¹ and the results were confirmed by repeating the test. Samples 4 and 9 were tested in four strain rates, 0.01-1 s⁻¹. Sample 8 was tested under three different strain rates, 0.1-1 s⁻¹. In all measurements the following melt and solid density values are taken as input prior to elongational measurement, 0.7 g/cm³ and 0.92 g/cm³ respectively.

Elongational measurements in which a broad range of Hencky strain rates was covered were performed. We observed that the strain hardening behavior is maximal for intermediate Hencky strain rates values. The experimental results are shown in **Fig. 1** for samples 2, 4, 6, 8 and 9 (**Fig. 1**)**.**

We observed that samples 6, 8 and 9 showed an improved elongational viscosity at strain hardening comprised between ε=0.3 s⁻¹ and ε=0.01s⁻¹. Sample 6 having an MFI of 1.16 g/10 min. and produced according to the invention presents improved elongational viscosity and strain hardening behavior which is maximal at an intermediate strain, i.e. ε=0.1s⁻¹. This is in contradiction with the comparative sample 2 wherein no improved elongational viscosity and strain hardening behavior could be observed **(****Fig. 1****).**

The improved elongational viscosity and strain hardening behavior is further illustrated in **Fig. 2** wherein the elongational viscosity of the polypropylene of sample 6 is compared to the elongational viscosity of the comparative example polypropylene and of two linear polymers L1 and L2. A clear difference is observed when comparing the elongational viscosity sample 4 with MFI = 3.5 g/10 min produced in a slurry-isobutane process and of a linear polypropylene L2 with similar MFI (MFI = 3 g/10 min.). The difference observed on **Fig. 2** is due to the presence of long chain branching in sample 4. L1 and L2 are two marketed linear polypropylene homopolymers commercially available as PPH3060 and PPH402 respectively.

Compared to linear polypropylene L1 having an MFI = 1.8 g/10 min., the polypropylene of sample 6 shows improved elongational viscosity and strain hardening. Said sample 6 has an MFI = 1.16 g/10 min and was produced in a slurry-isobutane prepolymerization followed by a bulk polymerization according to the process of the invention.

## Claims

1. A process for the production of a polypropylene polymer blend presenting improved elongational viscosity and strain hardening behavior, said process comprising:
i) in a first step, providing a first polymer with long chain branches,
ii) in a second step, polymerizing propylene monomer and optionally at least one alpha olefin comonomer in the presence of a metallocene catalyst, and hydrogen thereby obtaining a second polymer, said second polymer is polymerized in the presence of the long chain branched first polymer, thereby obtaining the polypropylene polymer blend,
**characterized in that**,
the melt flow index of the first polymer is lower than the melt flow index of the second polymer and is at maximum 10 g/10 min, and the ratio of the melt flow index of the first polymer to the melt flow index of the second polymer is at least 10.

2. The process according to claim 1, wherein the polymer blend comprises from 0.1 to 25 wt% of the first polymer, expressed in total weight of polymers in the blend.

3. The process according to claim 1 or 2, wherein the long chain branched first polymer is obtained by polymerizing propylene monomer and optionally at least one alpha olefin comonomer in the presence of a metallocene polymerization catalyst, a diluent and in the absence of hydrogen.

4. The process according to claim 3, wherein the metallocene catalyst is *rac-*Me₂Si(2-Me-4-Ph- Ind)₂ZrCl₂ or Ph₂C(2-Me-4-tBu-Cp)(2,7-tBu₂-Flu)ZrCl.

5. The process according to any of claims 1-4, wherein the blend has a molecular weight distribution, defined as the ratio M_{w}/Mₙ of weight average molecular weight M_{w} to number average molecular weight Mₙ, of at least 2.0 and of at most 5, with Mₙ and M_{w} determined by size exclusion chromatography.

6. Polypropylene blend obtained according to a process of any of claims 1-5, **characterized in that** the strain hardening reaches its maximum at a Hencky strain rate value ε₀ between 1 and 0.001s⁻¹, as measured using the ARES Elongation Viscosity Fixture at a temperature of 180 °C and density value between 0.7g/cm³ and 0.92 g/cm³.

7. Polypropylene blend according to claim 6, wherein a plot setting out elongational viscosity, expressed in Pa.s, versus time, expressed in seconds, at Hencky strain rate values between 1 and 0.001s⁻¹, displays a maximum between 0.8 and 0.01s⁻¹.

8. Process for manufacturing a polymer article, comprising blow moulding a polypropylene blend as described in claim 6 or 7.
